# EUROPEAN PATENT SPECIFICATION

(11) **EP 2 456 339 B1**
(45) Date of publication and mention of the grant of the patent: **08.01.2014**
(21) Application number: 10801861.5
(22) Date of filing: 05.02.2010
(51) Int. Cl.: A47J 37/04, A47J 37/06, A21B 1/02, A47J 37/08

(54) **INTERNALLY ELECTRIC HEATING BARBECUE**
GRILL MIT INTERNER ELEKTRISCHER ERHITZUNG
BARBECUE À CHAUFFAGE ÉLECTRIQUE INTERNE

(30) Priority: 24.07.2009 CN 200910055385
(43) Date of publication of application: 30.05.2012
(73) Proprietor: Li, Lin, Shanghai 200030 (CN)
(72) Inventor: Li, Lin, Shanghai 200030 (CN)
(74) Representative: Hall, Graeme Keith
(86) International application number: PCT/CN2010/070544
(87) International publication number: WO 2011/009301

(56) References cited:
- WO-A1-96/14786
- WO-A1-98/55010
- CN-A- 1 128 942
- CN-A- 1 178 637
- CN-A- 1 488 309
- CN-A- 1 518 935
- CN-A- 101 617 917
- CN-Y- 2 214 786
- CN-Y- 2 449 618
- CN-Y- 201 303 564
- GB-A- 2 440 714
- US-A- 4 901 631
- US-A- 5 735 191
- US-A1- 2009 049 993

## Description

### BACKGROUND OF THE INVENTION

### 1. Technical Field

The invention relates to a barbecue, in particular to an internally electric heated barbecue.

### 2. Description of Related Art

The barbecue devices in the current market are mainly direct fired barbecues that burn charcoal as the origin of heat, which apply a top-opening cabinet structure. The ignited charcoal is placed at the bottom of the cabinet while using, and generally the barbecuing area is above the heating area, e.g. a net rack is on the upper part of the cabinet for the food to be barbecued. The potential problem is that the ignition of charcoal is quite difficult. And the burning of charcoal will bring a large amount of smoke and ash, which not only causes the pollution of the air but also affects the cleanness of the barbecued food. And it is easy to cause the food undercooked or scorched due to the difficulty of control of the fire temperature, thus being difficult to control the quality of food. In order to solve the problems of the charcoal burned barbecue, some top-opening electrically heated barbecues are designed. However, since the issues regarding temperature adjustment and time adjustment of the barbecue are not solved, the quality of the barbecued food remains unsatisfied. Additionally, since the temperature at the lower part is much higher than in the upper part of such barbecue, the heat may lose during the process of heat transfer from the bottom up which causes the waste of energy, and the food may fall down to the bottom of the device during barbecuing thus being burnt and causing smog pollution which makes the barbecue difficult to clean after cooking. Since the current barbecuing device can only heat one side of the food, the user is required to flip the food constantly during barbecuing to evenly heat both sides of the food, and the barbecuing condition of the food needs to be judged by experience, which makes it difficult to control the food quality.

One example of the prior art is WO96/14786A which discloses the preamble of claim 1.

### SUMMARY OF THE INVENTION

An internally electric heated barbecue is provided in the present invention, which created a brand-new way to simplify the operation of barbecue and make it safe and clean, through which the food quality can be controlled effectively.

In order to achieve the above-mentioned purposes, an internally electric heated barbecue is characterized in that: the opening is 30mm-200mm wide; the rack supporting part has a concavity and a supporting part, the barbecue rack's support rod holder has a convexity matching with the concavity to limit the position of the barbecue rack, and the supporting part is used to support the barbecue rack's support holder.

Preferably the barbecue rack's support rod holder includes a first rod holder and a second rod holder, which are fixed separately and connected to the other sides of the two frames, wherein said two rod holders have certain gradient.

Preferably, the two frames pin joining parts have position holders.

Preferably, the two rod holders have buckling parts which cooperate with each other. Preferably, the barbecue rack is equipped with food skewers, and the food skewer comprises a handle, a support locating part and a food fixing part, wherein the food fixing part is cylindrical or flat, and the food fixing part contains a plurality of limiting embosses.

Preferably, the support locating part is a locating disc, said food fixing part is clamped by the barbecue rack, and said support locating part limits the handle to outside of the barbecue rack.

Preferably, the cabinet has a removable water tank at the bottom.

Preferably, the internally electric heated barbecue has a temperature control unit and a timing unit.

The internally electric heated barbecue presented in the invention has an opening with appropriate width, which avoids the food sanitation problems caused by the contact of the food with other parts of the cabinet due to small opening during placing the barbecue rack into the barbecue and the burnt smell problem during barbecuing, and also avoids the energy-consuming problem caused by rapid heat loss and the uneven foot heating problem due to big opening. The combination of two-sided vertical heating unit and the barbecue rack provides relatively even and stable temperature inside the barbecue, having no need of flipping food, instead, makes barbecuing easy and controllable by controlling the time and temperature. Therefore users are free from the complicated process and it becomes a good assistant in the daily cooking in the kitchen. The present invention has the advantages of having no smog, being easy to clean and convenient to operate, capable of removing excessive grease effectively and controlling barbecuing quality accurately.

### BRIEF DESCRIPTION OF THE DRAWINGS

Fig. 1 is a schematic representation of the preferred embodiment of the internally electric heated barbecue's structure in the present invention.
Fig. 2 is a schematic representation of the preferred embodiment of the internally electric heated barbecue's top opening in the present invention.
Fig. 3 is a schematic representation of the preferred embodiment of the internally electric heated barbecue's structure decomposition in the present invention.
Fig. 4 to Fig. 6 is a schematic representation of another preferred embodiment of the internally electric heated barbecue's structure in the present invention.
Fig. 7 is a schematic representation of the preferred embodiment of the barbecue rack's closing status in the present invention.
Fig. 8 is a schematic representation of the preferred embodiment of the barbecue rack's opening status in the present invention.
Fig. 9 is a schematic representation of the preferred embodiment of the barbecue rack's utilizing status in the present invention.
Fig. 10 is a schematic representation of another preferred embodiment of the barbecue rack in the present invention.
Fig. 11a. Fig. 11b and Fig. 11c are schematic representations of the preferred embodiment of the food skewer's structure.
Fig. 12 is a schematic representation of the preferred embodiment of the internally electric heated barbecue's overall structure in the present invention.

### DETAILED DESCRIPTION OF THE INVENTION

For a better description of the technical contents of the present invention, the specific preferred embodiments are hereby given as follows with reference to the appended drawings.

An internally electric heated barbecue provided in the present invention is characterized in a simple, safe and clean operation, and it has an effective way to control the food quality.

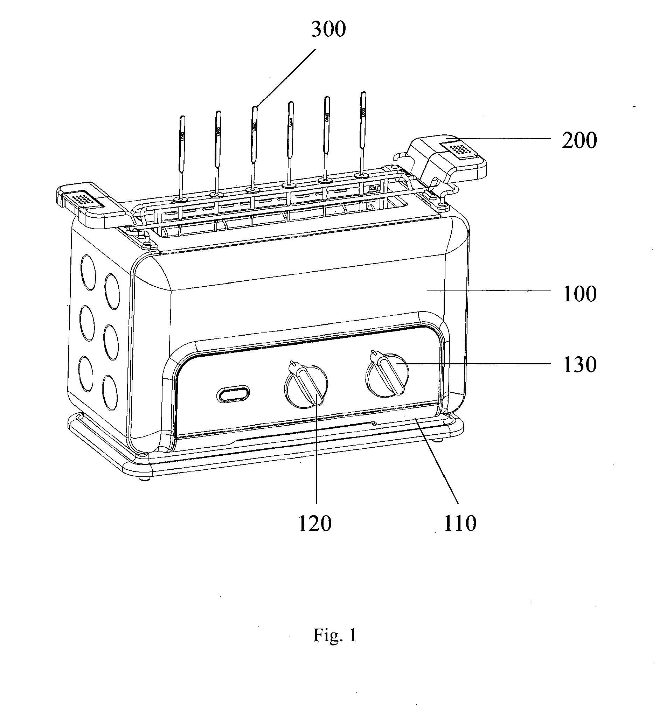

Refer to Fig. 1. Fig. 1 is a schematic representation of the preferred embodiment of the internally electric heated barbecue's structure in the present invention. As shown in the figure, the internally electric heated barbecue provided in the present invention comprises a cabinet 100 with upper opening, a barbecue rack 200 located inside the cabinet 100 and at the opening, and food skewers 300 that work with the barbecue rack, wherein the barbecue cabinet 100 has a removable water tank 110 at the bottom; the removable water tank 110 is used to collect liquids like the water or oil drops from the food while barbecuing, and such removable water tank 110 can be easily taken out from the cabinet 100 for cleaning and be installed again to ensure the internal cleanness of the cabinet of the barbecue. The barbecue has timing unit 120 and temperature control unit 130 (accurate electronic temperature control or electronic timing also acceptable) at the side to control the barbecue temperature inside the barbecue and time the barbecuing, so as to accurately control the barbecuing quality.

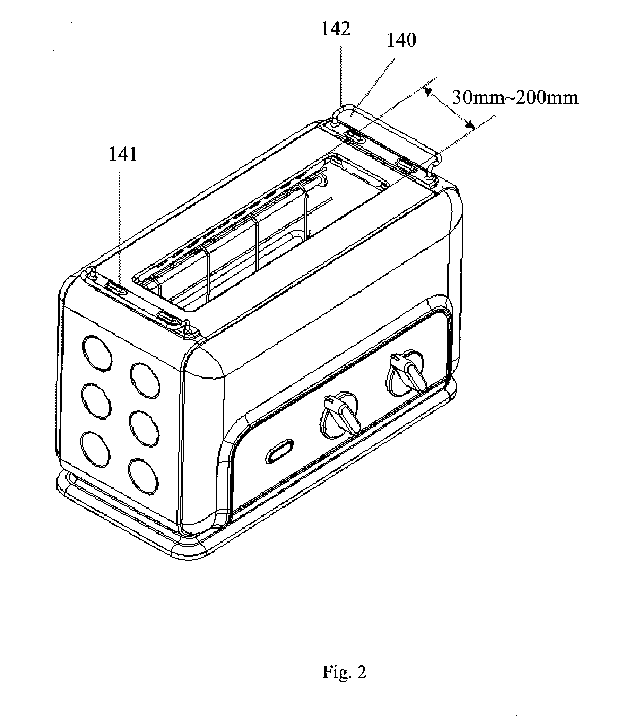

Refer to Fig. 2. Fig. 2 is a schematic representation of the preferred embodiment of the internally electric heated barbecue's top opening in the present invention. As shown in the figure, the internally electric heated barbecue in the present invention has a top opening with a width of 30mm-200mm; when the opening is too small, the food is likely to touch other parts of the barbecue cabinet 100 while placing the barbecue rack 200 into the barbecue cabinet 100, which is unclean and tend to release burnt smell during barbecuing. But if the opening is too large, the heat loss inside the barbecue will be rapid, which will not only increase the energy consumption, but also lead to uneven heating of the food. The present invention sets the width of the top opening on the cabinet 100 to be 30mm-200mm for the best result; the cabinet 100 of the internally electric heated barbecue provided in the present invention may have many top openings so as to barbecue lots of food, wherein the number of the top openings can be tailored in accordance with the customer requirement. Also as shown in Fig. 2, the opening of the cabinet 100 has rack supporting part 140 for supporting the barbecue rack 200, and the rack supporting part 140 has a concavity 141 and a supporting part 142, wherein the concavity 141 is used to limit the position of the barbecue rack 200 on the top opening of the cabinet 100, while the supporting part 142 is used to support the barbecue rack 200 to prevent it from falling into the cabinet 100.

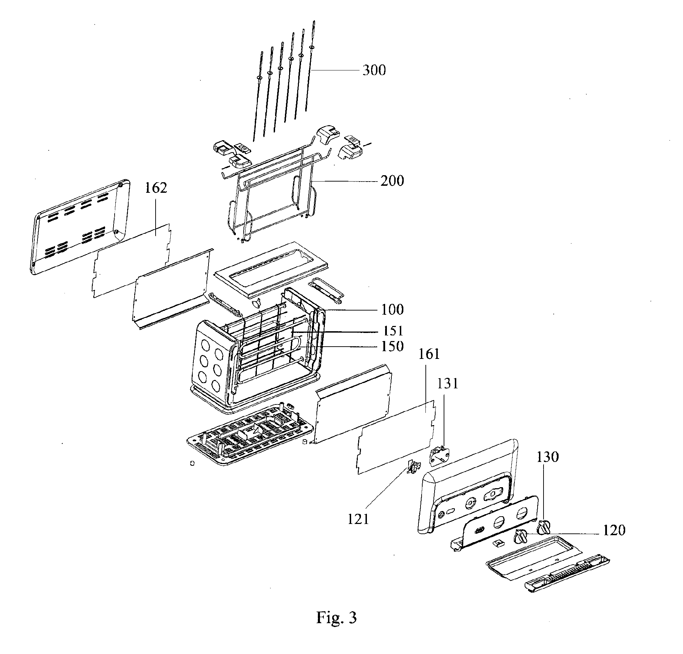

Refer to Fig. 3 then. Fig. 3 is a schematic representation of the preferred embodiment of the internally electric heated barbecue's structure decomposition in the present invention. As shown in the figure, the cabinet 100 of the internally electric heated barbecue provided in the present invention has symmetrical vertical heating units 150 at both sides inside it, which may be tubular electric heating element or infrared heating tube, wherein the distance between the symmetrical vertical heating units 150 at both sides inside the cabinet 100 can be 70mm-230mm. The combination of the two-sided vertical electric heating unit 150 and the barbecue rack 200 provides relatively even and stable temperature inside the barbecue, thus avoiding flipping food and some trouble in operating. Meanwhile, the electric heating units 150 are respectively equipped with food separating grid 151 to prevent the barbecue rack 200 from touching the electric heating unit 150 while being placed into the cabinet 100, wherein inside the cabinet 100 is a timer 121 and a temperature controller 131 which are separately connected to the timing unit 120 and temperature control unit 130 so as to control the barbecuing time and temperature; the cabinet 100 is also equipped with a temperature protector (not shown in the figure) and laminated micas 161 and 162. Insulating boards are separately equipped on the sides of the cabinet 100 and on the ground to maintain the barbecuing temperature inside the cabinet 100 so as to avoid energy loss and to reduce energy consumption, as well as to avoid damaging user by the superheated housing of the internally electric heated barbecue.

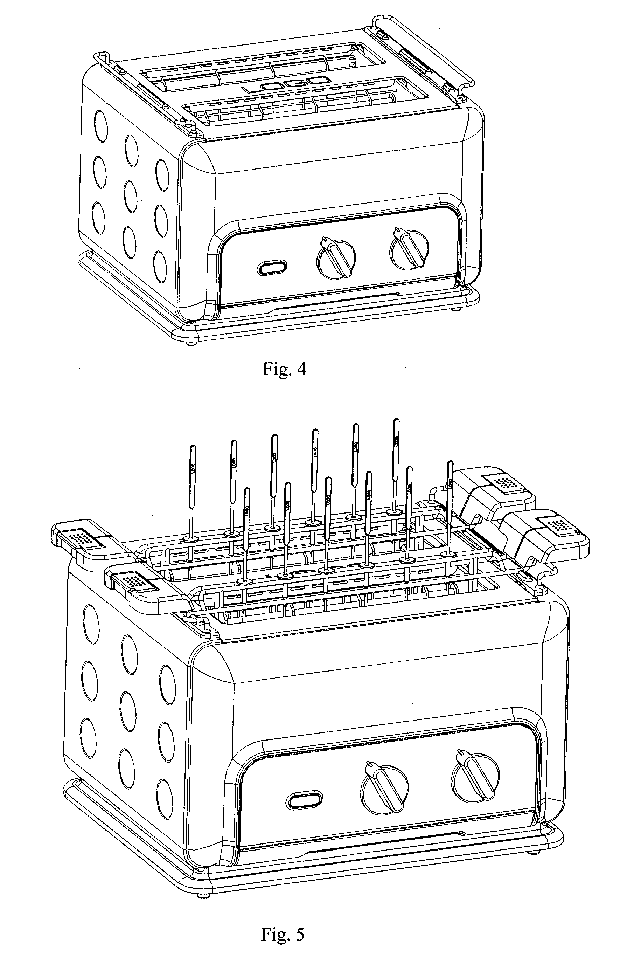

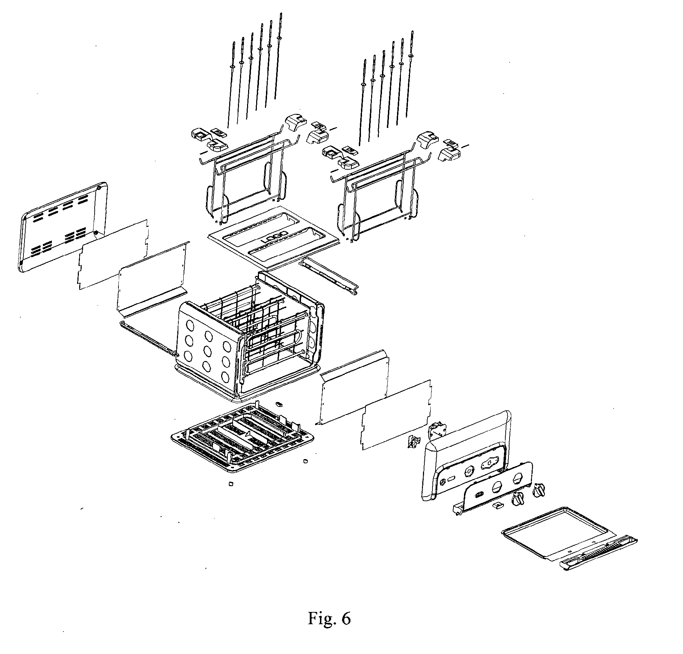

Refer to Fig. 4 - Figure 6 then. Fig. 4 - Fig. 6 are schematic representations of another preferred embodiment of the internally electric heated barbecue's structure in the present invention. The internally electric heated barbecue as shown in Fig. 4 - Fig. 6 has 2 top openings so as to barbecue more food simultaneously in the 2 different openings, wherein the number of top opening can be tailored in accordance with the user requirement.

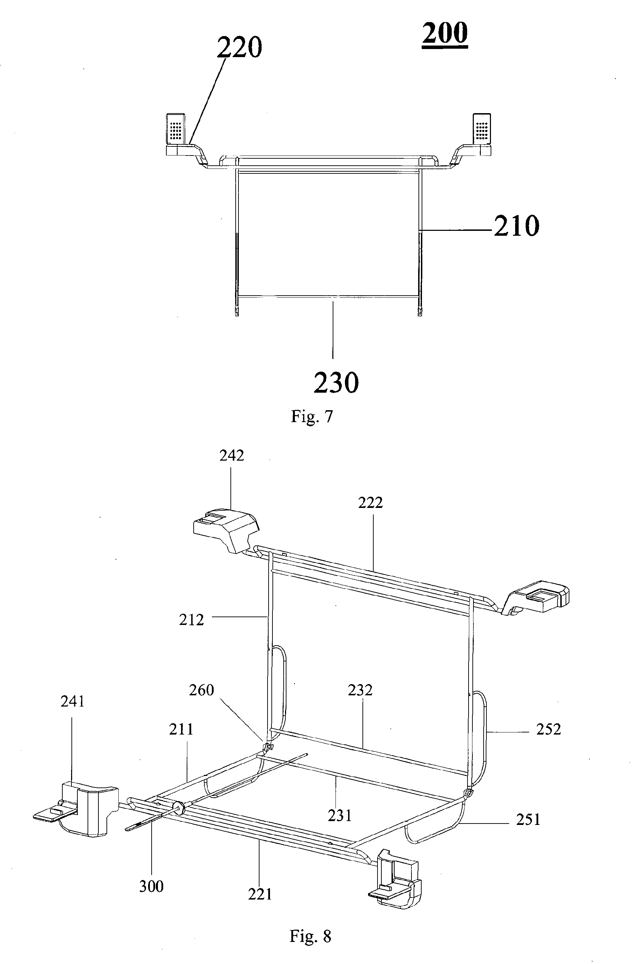

Refer to Fig. 7 and Fig. 8 then. Fig. 7 is a schematic representation of the preferred embodiment of the barbecue rack's closing status in the present invention, and Fig. 8 is a schematic representation of the preferred embodiment of the barbecue rack's opening status in the present invention. The barbecue rack 200 comprises a barbecue frame 210 and a support rod holder 220, wherein the barbecue frame 210 is set within the opening of the cabinet 100 during barbecuing, while the support rod holder 220 is set on the rack supporting part 140 during barbecuing. The support rod holder 220 of the barbecue rack 200 has convexity which are set in the concavity 141 of the aforesaid rack supporting part 140 to limit the position of the aforesaid barbecue rack 200, and the support rod holder 220 of the barbecue rack 200 is supported on the supporting part 142 on the aforesaid rack supporting part 140 to prevent the barbecue rack 200 from falling into the cabinet 100. The barbecue frame 210 of the barbecue rack 200 consists of a first frame 211 and a second frame 212, and the two frames 211 and 212 are pin joined at one end of them by rotating shafts; the support rod holder 220 of the barbecue rack 200 consists of a first rod holder 221 and a second rod holder 222, and the two rod holders 221 and 222 are fixed separately and connected to the other sides of the two frames 211 and 212, wherein said two rod holders 221 and 222 have certain gradient to give space for avoiding hand touching while using. While the pin joining parts of the two frames 211 and 212 have blocking racks 230 to form an anti-food-falling blocking area to prevent the food on the food skewer 300 from falling down due to the gravity during barbecuing, and meanwhile ensure the cleanness inside the barbecue cabinet 100. The blocking rack 230 consists of two stop pins 231 and 232, and a certain distance is left between the central points of the rotating shafts and the two stop pins 231 and 232, which facilitates the positioning while placing food skewers 300 into the barbecue rack 200. The pin joining parts of the two frames 211 and 212 have position holders 260 to limit the open angles of the two frames 211 and 212, thus effectively avoid burning other objects due to the large open angle of the frames under continuous use of the barbecue, and reducing the operating space at the same time. In addition, the two frames 211 and 212 are respectively equipped with larger curved withstanding frames 251 and 252 at the outer sides, which facilitate taking and placing food. When the barbecue rack 200 is installed in the cabinet 100, the food is kept between the inner sides of the frames 211 and 212, so that the arc withstanding frames 251 and 252 can avoid the food from touching the internal of the cabinet 100 and keep the cabinet 100 clean; moreover, the arc withstanding frames 251 and 252 can make the food on the food skewer hang in the air while opening the barbecue rack, thus effectively preventing food from touching the surface below. The two rod holders 221 and 222 have buckling parts 241 and 242 cooperating with each other, which ensure the food skewers 300 are fixed firmly on the barbecue rack 200 while combining the two frames 211 and 212.

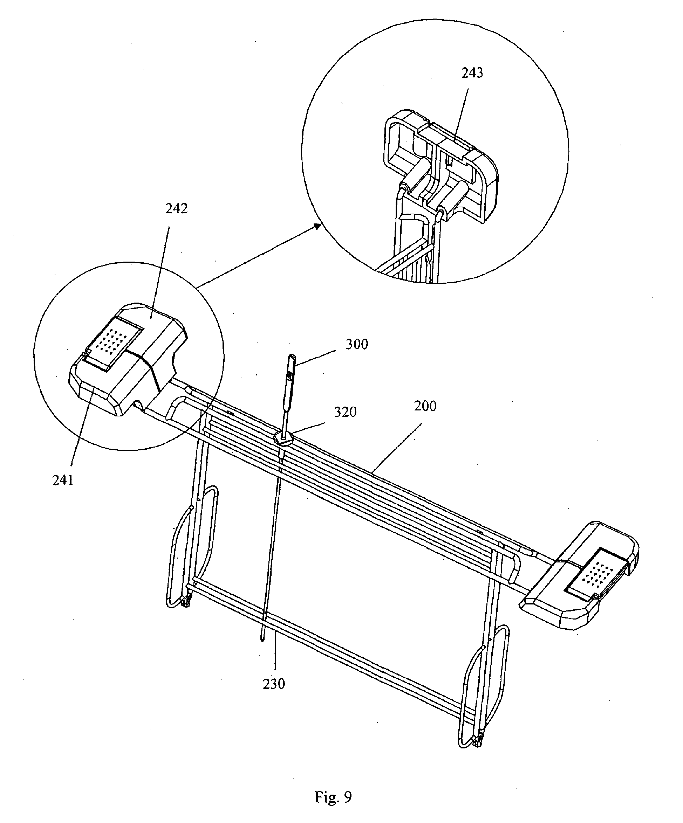

Refer to Fig. 9 then. Fig. 9 is a schematic representation of the preferred embodiment of the barbecue rack's utilizing status in the present invention. The food skewer 300 is firmly clamped by the barbecue rack 200. The food skewer 300 consists of a support locating part 320 for supporting and locating the food skewer 300 on the barbecue rack 200, while the blocking rack 230 serves as the anti-food-falling blocking area. Wherein the buckling parts 241 and 242 of the two rod holders 221 and 222 leave a certain space 243 while being buckled together so as to move aside the closed cover above easily with finger(s).

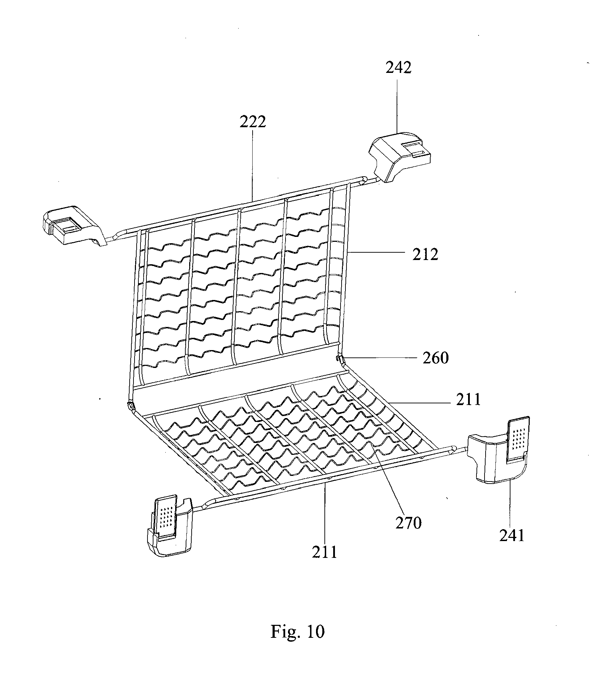

Refer to Fig. 10 then. Fig. 10 is a schematic representation of another preferred embodiment of the barbecue rack in the present invention. The two frames 211 and 212 have waved stainless steel wires. This barbecue rack 200 is designed to barbecue larger piece of food (fish, steak, squid, etc.), characterized in that: the transverse finer stainless steel wire 270 is designed to waved shape, and only fix and connect on both ends, which provides better deformability, and better clamp and locate the food of different thickness within a certain range while closing the two frames 211 and 212.

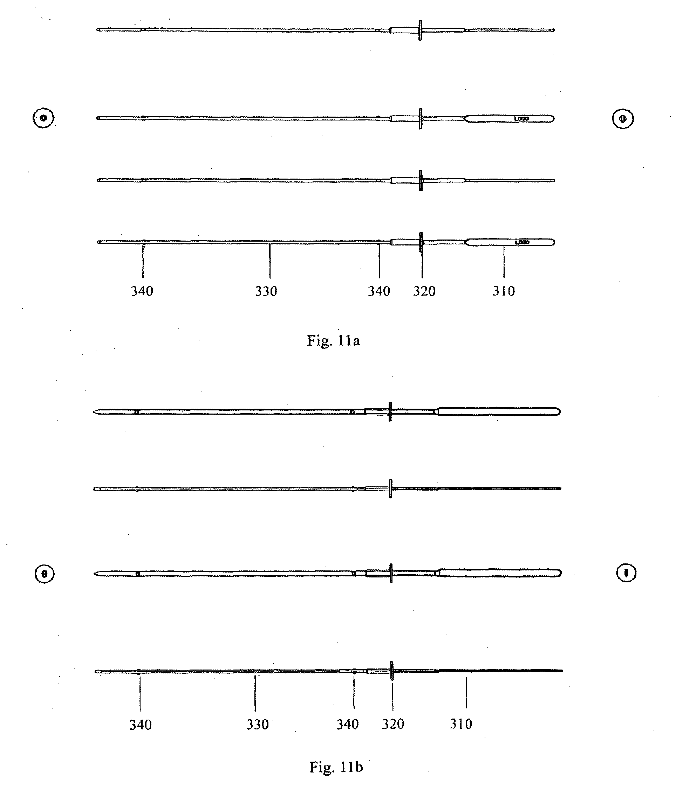

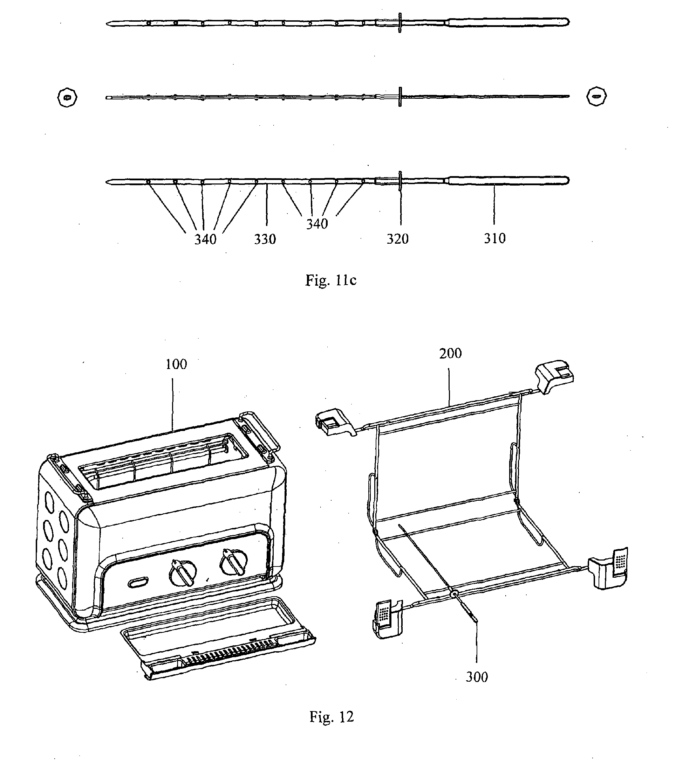

Refer to Fig. 11a, 11b and 11c then. Fig. 11a, Fig. 11b and Fig. 11c are schematic representations of the preferred embodiment of the food skewer's structure. As shown in the figures, the food skewer 300 consists of a handle 310, a support locating part 320 and a food fixing part 330. While the support locating part 320 is a locating disc or a locating part of other shapes, and the food fixing part 330 is cylindrical or flat (see the left-sided and right-sided views of the food skewer in each figure), suitable for different food; while barbecuing, the food fixing part 330 is clamped by the barbecue rack 200, and the support locating part 320 limits the handle 310 to outside the barbecue rack 200 for easy taking out; wherein the food fixing part 330 as shown in Fig. 11a and Fig. 11b contains two limiting convexities 340 for limiting the food between the two limiting convexities 340; the food fixing part 330 as shown in Fig. 11c contains lots of limiting convexities 340 for limiting the food and easy cleaning as well as preventing food from falling down.

Refer to Fig. 12 then. Fig. 12 is a schematic representation of the preferred embodiment of the internally electric heated barbecue's overall structure in the present invention. The internally electric heated barbecue provided in the present invention consists of a cabinet 100, a barbecue rack 200 and food skewers 300. The opening of the cabinet has an appropriate width, which eliminates the sanitary problems caused by the contact of the food with other parts due to smaller opening during placing the barbecue rack into the barbecue and the burnt smell problems during barbecuing, and also eliminates the energy-consuming problem caused by rapid heat loss due to big opening and the uneven foot heating problems; the combination of two-sided vertical heating unit and the barbecue rack provides relatively even and stable temperature inside the barbecue, eliminating the need for flipping food, instead, makes barbecuing easy and controllable by controlling the time and temperature; as a result of the combination of the internally electric heated barbecue provided in the present invention with the self-contained menus frees user out of the complicated process and it will become a good assistant in the daily cooking in the kitchen. The present invention has the advantages of being easy to clean and convenient to operate, capable of removing excessive grease effectively and controlling barbecuing quality.

Although the present invention has been disclosed with reference to the preferred embodiments, it is not to limit the present invention. Those with common knowledge in the technical field of the present invention may modify and render it without departing from the scope of the invention. Therefore, the protection scope of the present invention shall be governed by that defined in the Claims.

## Claims

1. An internally electric heated barbecue, having a cabinet (100) with at least one upper opening; the cabinet has electric heating units (150) at both sides inside it; the opening has rack supporting part (140) to support a barbecue rack (200); said barbecue rack (200) comprises a barbecue frame (210) and a support rod holder (220); said barbecue frame (210) is within the opening, and said support rod holder (220) is on the rack supporting part (140); said barbecue rack's (200) barbecue frame (210) consists of a first frame (211) and a second frame (212), which are pin joined at one end; said two frames' (211, 212) pin joining parts have blocking racks (230); said two frames (211, 212) have arc withstanding frames (251, 252) respectively, **characterized in that**: the opening is 34mm-200mm wide; said rack supporting part (140) has a concavity (141) and a supporting part (142), said barbecue rack's (200) support rod holder (220) has a convexity matching with the concavity (141) to limit the position of the barbecue rack (200), and said supporting part (142) is used to support the barbecue rack's (200) support rod holder (220).

2. The internally electric heated barbecue according to claim 1, **characterized in that**: said barbecue rack's (200) support rod holder (220) consists of a first rod holder (221) and a second rod holder (222), which are fixed separately and connected to the other sides of the two frames (211, 212).

3. The internally electric heated barbecue according to claim 2, **characterized in that**: said first rod holder (221) and second rod holder (222) have certain gradient.

4. The internally electric heated barbecue according to claim 1, **characterized in that**: said two frames (211, 212) pin joining parts have position holders (260).

5. The internally electric heated barbecue according to claim 2, **characterized in that**: said two rod holders (221, 222) have buckling parts (241, 242) which cooperate with each other.

6. The internally electric heated barbecue according to claim 1, **characterized in that**: said barbecue rack (200) is equipped with food skewers (300), and the food skewer (300) comprises a handle (310), a support locating part (320) and a food fixing part (330).

7. The internally electric heated barbecue according to claim 6, **characterized in that**: said food fixing part (330) is cylindrical or flat.

8. The internally electric heated barbecue according to claim 6, **characterized in that**: said food fixing part (330) contains two or more limiting convexities (340).

9. The internally electric heated barbecue according to claim 6, **characterized in that**: said support locating part (320) is a locating disc, said food fixing part (330) is clamped by the barbecue rack (200), and said support locating part (320) limit the handle (310) to outside of the barbecue rack (200).

10. The internally electric heated barbecue according to claim 1**, characterized in that**: said cabinet (100) has a removable water tank (110) at the bottom.

11. The internally electric heated barbecue according to claim 1, **characterized in that**: said internally electric heated barbecue has a temperature control unit (130) and a timing unit (120).

## Patentansprüche

1. Intern elektrisch erhitzter Grill mit einem Gehäuse (100) mit mindestens einer oberen Öffnung; wobei das Gehäuse elektrische Erhitzungseinheiten (150) auf beiden Seiten in seinem Inneren aufweist; wobei die Öffnung einen Gestell-Stützteil (140) aufweist, um ein Grillgestell (200) zu stützen; wobei das Grillgestell (200) einen Grillrahmen (210) und einen Stützstangenhalter (220) aufweist; wobei sich der Grillrahmen (210) innerhalb der Öffnung befindet und sich der Stützstangenhalter (220) auf dem Gestellstützteil (140) befindet, wobei der Grillrahmen (200) des Grillgestells (210) aus einem ersten Rahmen (211) und einem zweiten Rahmen (212) besteht, die an einem Ende mit Stiften verbunden sind; wobei die Stift-Verbindungsteile der zwei Rahmen (211, 212) Blockiergestelle (230) aufweisen, wobei die zwei Rahmen (211, 212) jeweils Bogen-Beständigkeits-Rahmen (251, 252) aufweisen, **dadurch gekennzeichnet, dass**: die Öffnung 30 mm - 200 mm breit ist; der Gestellstützteil (140) eine Konkavität (141) und einen Stützteil (142) aufweist, wobei der Stützstangenhalter (220) des Grillgestells (200) eine Konvexität aufweist, die zur Konkavität (141) passt, um die Position auf dem Grillgestell (200) zu begrenzen, und der Stützteil (142) verwendet wird, um den Stützstangenhalter (220) des Grillgestells (200) zu stützen.

2. Intern elektrisch erhitzter Grill nach Anspruch 1, **dadurch gekennzeichnet, dass** der Stützstangenhalter (220) des Grillgestells (200) aus einem ersten Stangenhalter (221) und einem zweiten Stangenhalter (222) besteht, die getrennt befestigt und mit den anderen Seiten der zwei Rahmen (211, 212) verbunden sind.

3. Intern elektrisch erhitzter Grill nach Anspruch 2, **dadurch gekennzeichnet, dass** der erste Stangenhalter (221) und der zweite Stangenhalter (222) einen bestimmten Gradienten aufweisen.

4. Intern elektrisch erhitzter Grill nach Anspruch 1, **dadurch gekennzeichnet, dass** die Stift-Verbindungsteile der zwei Rahmen (211, 212) Positionshalter (260) aufweisen.

5. Intern elektrisch erhitzter Grill nach Anspruch 2, **dadurch gekennzeichnet, dass** die zwei Stangenhalter (221, 222) Spangenteile (241, 242) aufweisen, die zusammenarbeiten.

6. Intern elektrisch erhitzter Grill nach Anspruch 1, **dadurch gekennzeichnet, dass** das Grillgestell (200) mit Lebensmittelspießen (300) ausgestattet ist, und der Lebensmittelspieß (300) einen Griff (310), einen Stützanordnungsteil (320) und einen Lebensmittelbefestigungsteil (330) umfasst.

7. Intern elektrisch erhitzter Grill nach Anspruch 6, **dadurch gekennzeichnet, dass** der Lebensmittelbefestigungsteil (330) zylindrisch oder flach ist.

8. Intern elektrisch erhitzter Grill nach Anspruch 6, **dadurch gekennzeichnet, dass** der Lebensmittelbefestigungsteil (330) zwei oder mehr begrenzende Konvexitäten (340) umfasst.

9. Intern elektrisch erhitzter Grill nach Anspruch 6, **dadurch gekennzeichnet, dass** der Stützanordnungsteil (320) eine Anbringungsscheibe ist, der Lebensmittelbefestigungsteil (330) durch das Grillgestell (200) geklemmt ist, und der Stützanordnungsteil (320) den Griff (310) an die Außenseite des Grillgestells (200) begrenzt,

10. Intern elektrisch erhitzter Grill nach Anspruch 1, **dadurch gekennzeichnet, dass** das Gehäuse (100) einen entfernbaren Wassertank (110) an der unteren Seite aufweist.

11. Intern elektrisch erhitzter Grill nach Anspruch 1, **dadurch gekennzeichnet, dass** der intern elektrisch erhitzte Grill eine Temperatursteuerungseinheit (130) und eine Takteinheit (120) umfasst.

## Revendications

1. Barbecue à chauffage électrique interne, possédant un boîtier (100) doté d'au moins une ouverture supérieure ; le boîtier présente des unités de chauffage électrique (150) des deux côtés à l'intérieur de celui-ci ; l'ouverture présente une partie de support de grille (140) pour supporter une grille de barbecue (200) ; ladite grille de barbecue (200) comprend un cadre de barbecue (210) et un support de tige de maintien (220) ; ledit cadre de barbecue (210) se trouve à l'intérieur de l'ouverture, et ledit support de tige de maintien (220) se trouve sur la partie de support de grille (140) ; le cadre de barbecue (210) de ladite grille de barbecue (200) se compose d'un premier cadre (211) et d'un second cadre (212) qui sont assemblés par goupille à une extrémité ; les parties assemblées par goupille desdits deux cadres (211, 212) possèdent des grilles de blocage (230) ; lesdits deux cadres (211, 212) possèdent des cadres résistant à l'arc (251, 252) respectivement, **caractérisé en ce que** : l'ouverture présente une largeur de 30 mm à 200 mm; ladite partie de support de grille (140) présente une concavité (141) et une partie de support (142), le support de tige de maintien (220) de ladite grille de barbecue (200) présente une convexité correspondant à la concavité (141) pour limiter la position de la grille de barbecue (200), et ladite partie de support (142) est utilisée pour soutenir le support de tige de maintien (220) de la grille de barbecue (200).

2. Barbecue à chauffage électrique interne selon la revendication 1, **caractérisé en ce que** : le support de tige de maintien (220) de ladite grille de barbecue (200) se compose d'un premier support de tige (221) et d'un second support de tige (222), qui sont fixés séparément et raccordés aux autres côtés des deux cadres (211, 212).

3. Barbecue à chauffage électrique interne selon la revendication 2, **caractérisé en ce que** : ledit premier support de tige (221) et le second support de tige (222) présentent une certaine inclinaison.

4. Barbecue à chauffage électrique interne selon la revendication 1, **caractérisé en ce que** : des parties assemblées par goupille desdits deux cadres (211, 212) présentent des supports de position (260).

5. Barbecue à chauffage électrique interne selon la revendication 2, **caractérisé en ce que** : lesdits deux supports de tige (221, 222) présentent des parties de gondolement (241, 242) qui coopèrent entre elles.

6. Barbecue à chauffage électrique interne selon la revendication 1, **caractérisé en ce que** : ladite grille de barbecue (200) est équipée de broches alimentaires (300) et la broche alimentaire (300) comprend une poignée (310), une partie de positionnement de support (320) et une partie de fixation d'aliment (330).

7. Barbecue à chauffage électrique interne selon la revendication 6, **caractérisé en ce que**: ladite partie de fixation d'aliment (330) est cylindrique ou plate.

8. Barbecue à chauffage électrique interne selon la revendication 6, **caractérisé en ce que** : ladite partie de fixation d'aliment (330) contient deux ou plusieurs convexités de limitation (340).

9. Barbecue à chauffage électrique interne selon la revendication 6, **caractérisé en ce que** : ladite partie de positionnement de support (320) est un disque de positionnement, ladite partie de fixation d'aliment (330) est serrée par la grille de barbecue (200), et ladite partie de positionnement de support (320) limite la poignée (310) à l'extérieur de la grille de barbecue (200).

10. Barbecue à chauffage électrique interne selon la revendication 1, **caractérisé en ce que** : ledit boîtier (100) possède un réservoir d'eau amovible (110) au fond.

11. Barbecue à chauffage électrique interne selon la revendication 1, **caractérisé en ce que**: ledit barbecue à chauffage électrique interne présente une unité de régulation de température (130) et une unité de minuterie (120).
